# EUROPEAN PATENT APPLICATION

(11) **EP 1 878 881 A1**
(43) Date of publication of application: **16.01.2008**
(21) Application number: 06714005.3
(22) Date of filing: 17.02.2006
(51) Int. Cl.: F01L 1/04, F16C 35/063

(54) **CAMSHAFT DEVICE AND METHOD OF ASSEMBLING CAMSHAFT DEVICE**

(30) Priority: 17.02.2005 JP 2005040759; 17.02.2005 JP 2005040761
(71) Applicant: JTEKT Corporation, Osaka-shi Osaka 542-8502 (JP)
(72) Inventor: UENO, Hiroshi c/o JTEKT Corporation, 5840074Osaka 542-8502 (JP); YAMAKAWA, Kazuyoshi c/o JTEKT Corporation, Osaka 542-8502 (JP); HAKATA, Toshihiro JTEKT Corporation, Osaka 542-8502 (JP)
(74) Representative: Popp, Eugen
(86) International application number: PCT/JP2006/302864
(87) International publication number: WO 2006/088149

(57) **Abstract**

A cam shaft assembly is provided which accomplishes torque reduction, which obviates a shortened service life of a bearing and which is designed to reduce a radial dimension with respect to the center of a cam shaft. The cam shaft assembly includes: the cam shaft (1); a cam 2 separate from the cam shaft (1) and including a through-hole so as to be fitted on the cam shaft (1); and a rolling bearing 3 including annular monolithic inner and outer rings and serving to rotatably support the cam shaft (1). The cam shaft (1) is formed in a linear structure which has the same diameter at its portion where the cam 2 is mounted and its portion where the rolling bearing 3 is mounted.

## Description

### Technical Field

The present invention relates to a cam shaft assembly for supporting a shaft with a cam by means of a bearing and an assembly method thereof. Particularly, the invention relates to a cam shaft assembly driven into rotation in synchronism with the rotation of an engine.

### Background Art

Conventionally, a slide bearing structure wherein an outer periphery of a journal portion of the cam shaft is directly supported by a bearing portion of a casing has been known as one example of a bearing structure for rotatably supporting the cam shaft in the casing. In this case, however, the bearing structure has drawbacks of a shortened service life and the production of vibrations and the like because the bearing portion is in direct contact with the outer periphery of the journal portion. As a solution to such a problem, a bearing structure has been provided wherein a bearing is disposed between the casing and the cam shaft.

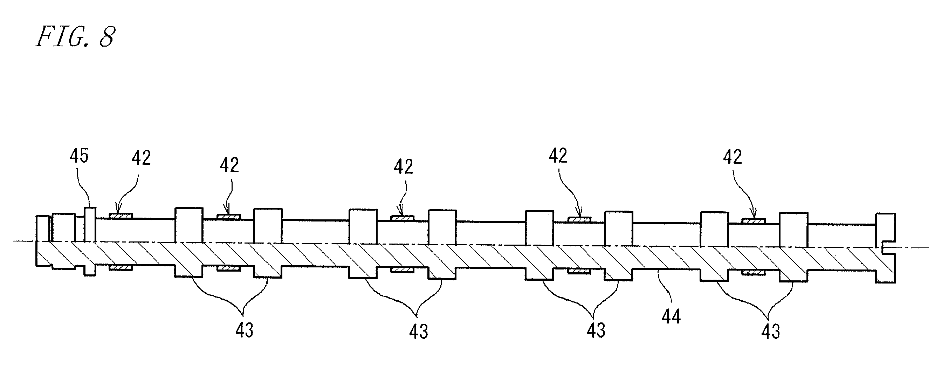

For instance, there is conventionally known an assembly wherein the cam shaft including cams for operating intake/exhaust valves of an automotive engine is rotatably supported. Such an assembly includes one disclosed in Japanese Unexamined Patent Publication No.H8 (1996)-218817. In this assembly, as shown in FIG.8, all the bearings are slide bearings 42. For improving the fuel economy of the engine, a bearing structure has been proposed wherein the cam shaft is supported by means of rolling bearings having small frictional resistance.
The conventional cam shaft includes a shaft body 44 and the cams 43 which are formed in one piece as shown in FIG. 8. For example, the cam shaft is cast in a structure unifying the shaft body 44 with the plural cams 43.

In a case where the engine includes a plural number of air cylinders so that the cam shaft is increased in length, it is necessary to support an intermediate portion of the cam shaft by means of a bearing. An annular bearing interposed between a pair of cams for supporting the intermediate portion of the cam shaft is designed to be divided into two fractions each having an axially sectioned surface. This is because the cams 43 are unified with the shaft body 44 and have a greater outside diameter than that of the shaft body 44. Hence, the bearing of the two-fraction structure must be employed and assembled to the shaft body 44 in a manner that the two fractions of the bearing clamp the shaft body 44.

A cam shaft assembly including the slide bearing disposed at the intermediate portion of the cam shaft is disclosed in Japanese Unexamined Patent Publication No.H4 (1992)-12102, for example. The slide bearing can adopt the two-fraction structure. It is a common practice to use the slide bearing of the two-fraction structure in the cam shaft assembly.
A cam shaft assembly including the rolling bearing is disclosed in Japanese Unexamined Utility Model Publication No.H5(1993)-6104, for example. This rolling bearing is constructed as a ball bearing wherein an outer ring is divided into two fractions. However, the ball bearing of the split structure includes a seam (section line) on a raceway surface, so that the balls moving over the seam produce vibrations and noises. This also results in a shortened service life of the bearing. Accordingly, it is difficult for the cam shaft assembly employing the ball bearing to find practical applications.

The rolling bearing wherein the bearing ring has the split structure may also be exemplified by a cylindrical roller bearing and a needle roller bearing which have a linear raceway. However, the cylindrical roller bearing has quite a great radial dimension so that the cam shaft assembly is increased in size. The needle roller bearing has a problem that a rolling element thereof cannot follow the deflection of the shaft to produce an edge load, thus shortening the service life of the assembly.
In this connection, a bearing structure which is assemblable without dividing the bearing ring into two fractions may be contemplated as suggested by Japanese Unexamined Utility Model Publication No.H6(1994)-8704. Specifically, the shaft is provided with a flange (journal portion) having a greater diameter than the maximum outside diameter of the cam in order to mount the rolling bearing between a pair of cams. The rolling bearing is mounted on an outer periphery of the flange.

### Disclosure of the Invention

The assembly disclosed in Japanese Unexamined Utility Model Publication No. H6 (1994)-8704 is not influenced by the cam and may be assembled by axially moving the rolling bearing from an end of the shaft and fitting the rolling bearing on the flange. In this case, however, the diameter of the flange is greater than the maximum outside diameter of the cam and hence, a space to accommodate the cam must be increased more than necessary. As a result, the whole body of an engine housing is increased in size.
That is, in the case where the cam shaft is supported by the bearing disposed between a pair of cams, the bearing must have the split structure in order to reduce a radial dimension with respect to the center of the cam shaft. In this case, however, the rolling element moves over the seam, thus entailing the production of vibrations and noises and the shortened service life. If the bearing possesses an annular monolithic bearing ring so as to be free from the seam, the whole body of the cam shaft assembly is increased in size for assembly purpose.

In the case of a cam shaft assembly which includes the cam shaft and the cam separate from each other and which is assembled by press-mounting the cam to the cam shaft, an assembly method may be contemplated wherein the rolling bearings, the cams and the other various components such as a pulley, which are separate members, are sequentially press-mounted to the cam shaft from one end thereof. When the rolling bearings and the cams are press-mounted to the cam shaft, however, the rolling bearings and the cams must be locked to predetermined axial positions, respectively. Hence, an assembling operation takes much labor to increase a manufacture cost.

In view of the foregoing, it is an object of the invention to provide a cam shaft assembly which is adapted to accomplish torque reduction by using the rolling bearing, which prevents the bearing from being shortened in service life and which is designed to reduce the radial dimension with respect to the center of the cam shaft, as well as to provide an assembly method thereof. Another object of the invention is to provide a cam shaft assembly providing for an easy assembly of the cams and rolling bearings thereby reducing the manufacture cost and to provide an assembly method thereof.

According to the invention for achieving the above object, a cam shaft assembly comprises: a cam shaft; a cam formed separately from the cam shaft and including a through-hole thereby to be fitted on the cam shaft; and a rolling bearing including an annular monolithic bearing ring and serving to rotatably support the cam shaft.
According to the constitution, the frictional resistance of the bearing is reduced by using the rolling bearing for supporting the cam shaft, whereby the cam shaft assembly may be reduced in friction loss during the rotation thereof. Particularly, the cam shaft assembly may be reduced in the frictional resistance at the start of rotation and during low speed rotation.
Since the cam is formed separately from the cam shaft, the rolling bearing may be moved from the end of the cam shaft as fitted thereon, so as to be mounted to the predetermined position. Therefore, the rolling bearing need not have its bearing ring formed in the split structure so that a raceway surface is free from the seam. In addition, the cam shaft permits the rolling bearing to be directly mounted on its outer periphery linearly extended in the axial direction. Hence, the cam shaft does not require the flange which is conventionally employed for fittting the rolling bearing thereon and which has the greater diameter than that of the cam. Thus is accomplished the reduction of the radial dimension with respect to the center of the cam shaft.

It is preferred that the cam is fixed to the cam shaft as fitted thereon with interference. This constitution provides a simple and rigid mounting of the cam. Furthermore, the constitution does not require an additional fixing member so that the number of components may be reduced.

It is preferred that the cam shaft has the same diameter at its portion where the cam is mounted and its portion where the rolling bearing is mounted. The cam shaft may be designed to have the linear (straight) structure, thereby permitting the centerless machining of the cam shaft. Furthermore, the cams and the rolling bearings may be axially moved from the end of the cam shaft to the predetermined positions as fitted thereon, respectively, whereby the cams and the rolling bearings are mounted to the cam shaft.

The rolling bearing comprises a deep groove ball bearing. This is advantageous in that the cam shaft is deflected to produce an angle of deflection of the bearing portion, followability is provided between the balls as the rolling element of the rolling bearing and the raceway surfaces defined by curved surfaces. Therefore, the edge load such as encountered by the needle roller bearing does not occur.
In addition, the bearing is capable of receiving an axial load exerted on the cam shaft. That is, the axial displacement or movement of the cam shaft may be restricted without using an additional member for receiving the axial load.

It is preferred that an inner-ring raceway groove of the rolling bearing is formed in an outer periphery of the cam shaft. This constitution permits the cam shaft to serve as the inner ring of the rolling bearing so that the number of components may be reduced and the rolling bearing may be increased in load carrying capacity.

It is preferred that an elastic ring member is mounted on an outer periphery of an outer ring of the rolling bearing. According to this constitution, a gap caused by a difference of radial thermal expansion between the rolling bearing and the housing may be eliminated by interposing the elastic ring member between the outer periphery of the outer ring of the rolling bearing and an inner periphery of the housing accommodating the cam shaft. Particularly, the ring member affords a greater effect in the rolling bearing having the greater radial dimension than in the slide bearing. This effect is further increased in a case where the housing is made of aluminum. In addition, the ring member is capable of suppressing the vibrations and noises of the rolling bearing supporting the cam shaft.

It is preferred that a disk for drivably rotating the cam shaft is mounted to the cam shaft and that the cam shaft is supported by a roller bearing at its portion near the disk.
In this constitution, a great radial load is exerted on the cam shaft at its portion mounted with the disk (e.g., pulley) for drivably rotating the cam shaft about its axis. However, the roller bearing having a great load carrying capacity is mounted to this portion of the cam shaft, so that this portion is supported in a stable manner. The disk for drivably rotating the cam shaft includes a pulley, a sprocket and a gear.

It is preferred that the cam shaft assembly further comprises a positioning spacer disposed on an outer periphery of the cam shaft and serving to restrict the axial movement of the cam and the rolling bearing relative to the cam shaft.
According to this constitution, the axial movement of the cam and rolling bearing relative to the cam shaft is restricted by the positioning spacer disposed on the outer periphery of the cam shaft. This negates the need for adjusting the positions of the cam and rolling bearing being assembled so that these components may be readily assembled to the cam shaft.

In an assembly method of a cam shaft assembly comprising a plurality of cams and a plurality of rolling bearings which are disposed on a cam shaft at predetermined axial positions, respectively, the cams separate from the cam shaft and including through-holes and the rolling bearings are axially moved on the linear cam shaft from an end thereof to the respective predetermined positions in turn, whereby the cams and the rolling bearings are mounted to the cam shaft.
According to this method, the rolling bearings are moved along the axial direction of the cam shaft so as to be mounted to the predetermined positions and hence, the rolling bearings need not have their bearing rings formed in the split structure. Therefore, the rolling bearings are free from the seams on their raceway surfaces. After the rolling bearing is mounted to the cam shaft, the cam may be mounted to place adjacent to the rolling bearing. Unlike the conventional assembly method, this method does not require the rolling bearing including the inner ring, the inside diameter of which is greater than the maximum outside diameter of the cam. That is, the cam shaft assembly assembled by this method is reduced in the radial dimension.
This method permits standardized cam and rolling bearing to be mounted to any axial positions. Hence, the method may easily cope with the change of the specifications of the cam shaft (e.g., the change of the position or the number of air cylinders of the engine).

It is preferred in this assembly method that the cam is fixed to the cam shaft as fitted thereon with interference between the through-hole thereof and the cam shaft. This provides for a simple and rigid mounting of the cam. In addition, an additional fixing member is not required so that the number of components may be reduced.

It is preferred in this assembly method that when each of the cams and the rolling bearings is press-mounted, a positioning spacer having a predetermined length is mounted to the cam shaft prior to the press-mounting thereof and subsequent to the press-mounting thereof.
In this case, the cam and the rolling bearing may be locked to the predetermined axial positions by means of the positioning spacers. Therefore, the cam shaft assembly may be assembled simply by threading the cams, rolling bearings and positioning spacers onto the cam shaft. Accordingly, the assembling operation is dramatically simplified so that the manufacture cost is reduced.

### Brief Description of the Drawings

FIG.1 is a side view partly in section for showing a cam shaft assembly according to one embodiment of the invention;
FIG.2 is an enlarged sectional view showing an essential part of FIG.1;
FIG.3 is a side view partly in section for showing a cam shaft assembly according to another embodiment of the invention;
FIG.4 is an enlarged sectional view showing an essential part of FIG.3;
FIG.5 is a graph showing a relation between the number of rotations and the frictional torque of each of a rolling bearing and a slide bearing;

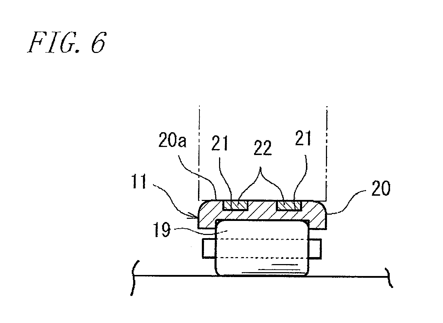

FIG.6 is an enlarged sectional view showing a roller bearing;
FIG.7 is a side view showing a cam shaft assembly according to another embodiment of the invention; and
FIG.8 is a sectional view showing a conventional cam shaft assembly.

### Best Modes for Carrying Out the Invention

The embodiments of the invention will hereinbelow be described with reference to the accompanying drawings.

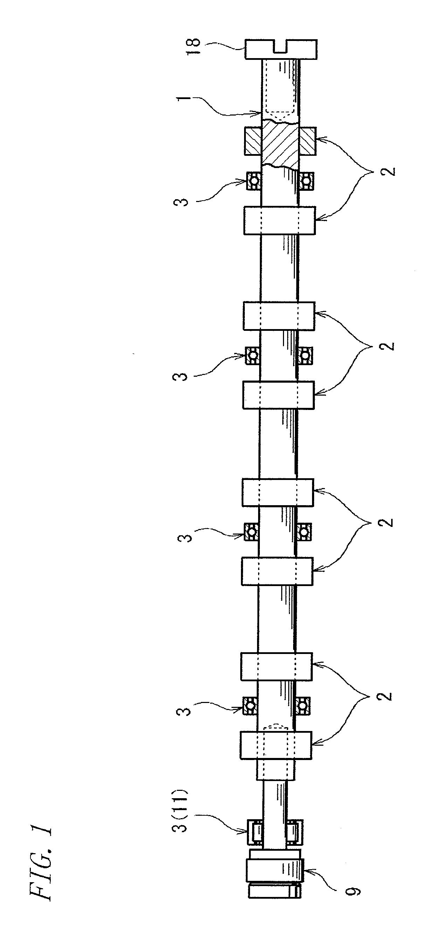

FIG. 1 is a side view partly in section for showing a cam shaft assembly according to one embodiment of the invention. The cam shaft assembly may be used in, for example, a cam shaft mechanism for operating intake/exhaust valves of an automotive engine. The assembly includes a cam shaft 1, a plurality of cams 2 and rolling bearings 3, the cams 2 and rolling bearings 3 disposed on the cam shaft 1 at predetermined positions with respect to an axial direction of the cam shaft 1. One rolling bearing 3 is interposed between a respective pair of cams 2.

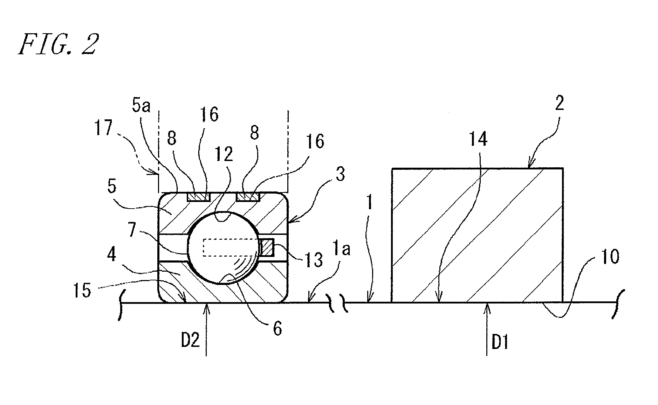

FIG.2 is an enlarged sectional view showing an essential part of FIG.1. The assembly includes the linear cam shaft 1, the oval cams 2 separate from the cam shaft 1 and fitted thereon, and the plural rolling bearings 3 rotatably supporting the cam shaft 1.

Unlike a cam shaft of a conventional example which is cast in one piece including a shaft body 44 and cam portions 43 as shown in FIG.8, the cam shaft 1 of the assembly is formed in an assemblable structure such that the cam shaft 1 and the cams 2 are formed discretely and then, the cams 2 are assembled to the cam shaft 1, as shown in FIG.1 and FIG.2. The cam shaft 1 is a bar member having a circular cross section. The cam 2 is formed with a through-hole 10 so as to be fitted on the cam shaft 1. This permits the cam 2 to be fitted on the cam shaft 1 via an end thereof and to be axially moved on the cam shaft 1 so as to be mounted to the cam shaft 1 at a predetermined axial position (cam mounting portion 14).

On the other hand, the rolling bearing 3 rotatably supports the cam shaft 1 as fitted on the cam shaft 1. The rolling bearing 3 is constituted by a deep groove ball bearing. As shown in FIG.2, the rolling bearing 3 includes: an inner ring 4; and an outer ring 5 disposed radially outwardly of the inner ring 4. A rolling element consisting of a plurality of balls 7 is interposed between a raceway groove 6 of the inner ring 4 and a raceway groove 12 of the outer ring 5. These balls 7 are retained by a cage 13. The bearing 3 is fixed to the cam shaft 1 by way of the inner ring 4 fitted on an outer periphery 1a of the cam shaft 1.

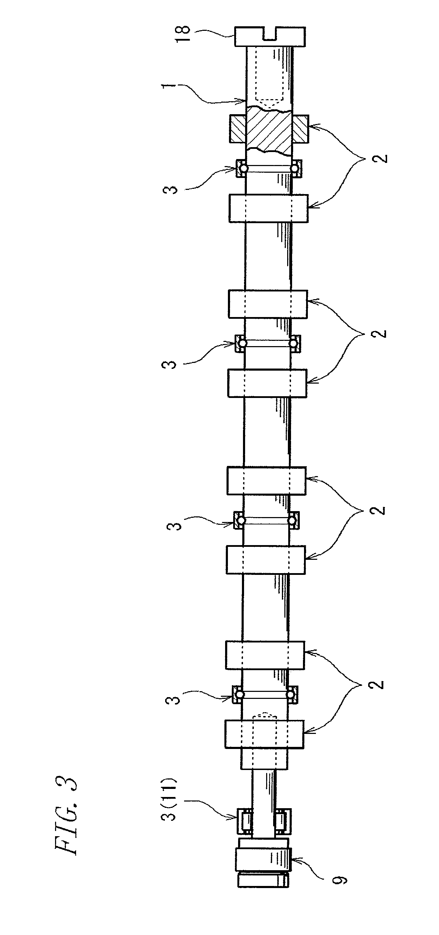

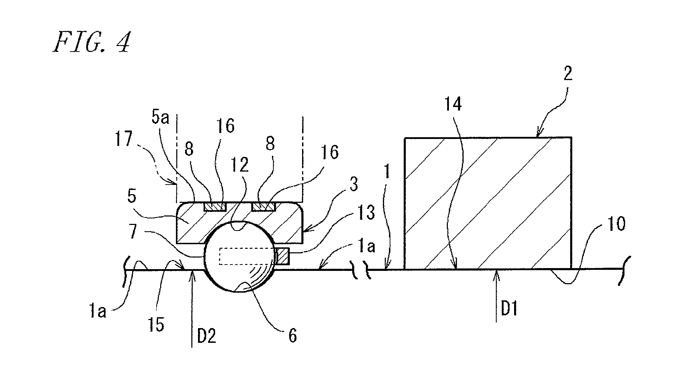

FIG.3 is a side view partly in section for showing a cam shaft assembly according to another embodiment of the invention. FIG.4 is an enlarged sectional view showing an essential part of FIG.3. The rolling bearing 3 assembled in the assembly shown in FIG.3 and FIG.4 is constituted such that the raceway groove 6 of the inner ring is formed in an outer periphery 1a of the cam shaft 1. This assembly omits the inner ring 4 of the assembly shown in FIG.2, using the cam shaft 1 as the inner ring. This constitution is adapted to reduce the number of components and also to increase load carrying capacity.

In the foregoing embodiments, the bearing ring of the rolling bearing 3 does not have a split structure but is an annular monolithic member (including a seamless raceway surface) (one-piece structure). In the case of the assembly shown in FIG.1 and FIG.2, the inner ring 4 and the outer ring 5 are each formed as the annular monolithic member rather than the split structure. In the case of the assembly shown in FIG.3 and FIG.4, the outer ring 5 is formed as the annular monolithic member rather than the split structure. The rolling bearing 3 is adapted to be axially moved along the cam shaft 1 from an end thereof as fitted thereon, so as to be mounted to the cam shaft 1 at the predetermined axial position (a rolling-bearing mounting portion 15).

While the cam 2 may be designed to rotate unitarily with the cam shaft 1 by using an unillustrated key member or the like, the cam 2 may preferably be fixed to the cam shaft 1 as fitted thereon with interference between the through-hole 10 thereof and the cam shaft 1. In this case, the cam 2 may be fixed to the cam shaft 1 by way of shrinkage-fit, for example. In the embodiment shown in FIG. 1 and FIG.2, the rolling bearing 3 is fixed to the cam shaft 1 by fitting the inner ring 4 on the cam shaft 1 with interference. This provides for a simple and rigid mounting of the cam 2 and the rolling bearing 3. This constitution does not require an additional fixing member, so that the number of components may be reduced.

The cam shaft 1 is formed in a linear structure which permits the individual cams 2 and rolling bearings 3 to be axially moved on the cam shaft 1 from the end thereof as fitted thereon so as to be mounted to the respective predetermined positions. In order to permit the individual cams 2 and rolling bearings 3 to be axially moved from the end of the cam shaft 1 to the respective predetermined positions, the linear cam shaft 1 is so constituted as to have the same outside diameter at the cam mounting portions 14 and at the bearing mounting portions 15 and also to define a circular section of the maximum outside diameter at these portions. Specifically, in the cam shaft 1 shown in FIG.2 and FIG. 4, an outside diameter D1 of all the cam mounting portions 14 is of an equal value to that of an outside diameter D2 of all the rolling-bearing mounting portions 15. In the case of FIG.4, the rolling-bearing mounting portion 15 is formed with the raceway groove 6 and hence, the outside diameter D2 of the rolling-bearing mounting portion 15 is defined to be a diameter determined at a shoulder portion.

The cam shaft assemblies of the foregoing embodiments are assembled as follows. The cam 2 separate from the cam shaft 1 is fitted on the linear cam shaft 1 from the end (first end) thereof and is axially moved thereon to the predetermined cam mounting portion 14, so as to be fixed thereto by way of fitting engagement with interference between the through-hole 10 of the cam 2 and the cam shaft 1. As to the rolling bearing 3 of the embodiment shown in FIG.1 and FIG.2, the inner ring 4 is fitted on the cam shaft 1 from the end (the first end) thereof and is axially moved thereon to the predetermined rolling-bearing mounting portion 15, so as to be fixed thereto with interference. As to the rolling bearing 3 of the embodiment shown in FIG.3 and FIG.4, the outer ring 5 is fitted on the end (the first end) of the cam shaft 1 and is axially moved to the predetermined rolling-bearing mounting portion 15 so as to be fixed thereto.
In each of the embodiments, the individual cams 2 and rolling bearings 3 are sequentially fitted on the first end of the cam shaft 1 according to the arrangement of the cams 2 and bearings 3 in the whole body of the assembly and are axially moved to the respective predetermined positions so as to be fixed thereto. The method permits the cams 2 and rolling bearings 3 to be laid out freely and also accomplishes the reduction of the number of components.

As shown in FIG.2 or FIG.4, an elastic ring member 8 is mounted on an outer periphery 5a of the outer ring 5 of the rolling bearing 3. The ring member 8 is fixed in a circumferential groove 16 formed in the outer periphery 5a of the outer ring 5. The ring member 8 may be formed from a resin or rubber material, for example. In the engine equipped with the cam shaft assembly, the ring member 8 is capable of reducing a gap or stress between a bearing mounting portion 17 of a housing and the rolling bearing 3, the gap or stress caused by a difference of radial expansion between the bearing mounting portion 17 of the housing and the rolling bearing 3 when a temperature difference occurs in the housing. While the ring member 8 is provided in two lines juxtaposing to each other in the axial direction, the ring member may be provided in one line or three or more lines.

As shown in FIG.1 and FIG.3, a pulley mounting portion 9 for driving the cam shaft 1 into rotation is mounted to the first end of the cam shaft 1. A belt (not shown) is entrained on the pulley mounting portion 9, such that an unillustrated rotary driver may drive the cam shaft 1 into rotation about its axis by means of the belt and the pulley mounting portion 9.
The first end of the cam shaft 1 is supported by a cylindrical roller bearing 11 at place near the pulley mounting portion 9. A great radial belt-load is exerted on the pulley mounting portion 9. However, the cylindrical roller bearing 11 having a great load carrying capacity is used so as to support the first end of the cam shaft 1 in a stable manner. The cylindrical roller bearing 11 has its inner ring defined by the shaft (cam shaft 1) to support, an outer periphery of which shaft defines a raceway surface for a cylindrical roller 19.
A circumferential groove 21 is also formed in an outer periphery 20a of an outer ring 20 of the cylindrical roller bearing 11. Similarly to the above ring member 8, an elastic ring member 22 is fixed in the circumferential groove 21.

Referring to FIG.1 and FIG.3, a shaft portion at the first end of the cam shaft 1, where the pulley mounting portion 9 is fixed, has a smaller outside diameter than that of the cam mounting portion 14 and the rolling-bearing mounting portion 15. On the other hand, the cam shaft 1 is provided with a projection portion 18 at its second end opposite to the first end thereof, the projection portion 18 having a greater outside diameter than that of the cam mounting portion 14 and the rolling-bearing mounting portion 15. The projection portion 18 is not formed integrally with the cam shaft 1 but is formed separately (separate member). The cam shaft 1 is formed with a screw hole at the second end thereof, while the projection portion 18 is formed with a male thread. The male thread is threadedly engaged with the screw hole whereby the projection portion 18 is fixed to the cam shaft 1. The second end of the cam shaft 1 also has an outside diameter equal to or smaller than that of the cam mounting portion 14 and the rolling-bearing mounting portion 15. This allows for the centerless machining (centerless polishing) of the cam mounting portions 14 and rolling-bearing mounting portions 15 of the cam shaft 1. Hence, the cam shaft 1 may be readily manufactured at low cost and with high precisions.

Specifically, in a case where the projection portion 18 having the greater diameter than that of the cam mounting portion 14 and the rolling-bearing mounting portion 15 is provided at the end of the cam shaft 1 for the purpose of positioning the cam shaft 1 or of meeting a need for mounting another member, the cam shaft 1 is formed with the thread or a key groove for mounting the projection portion 18. Thus, the cam shaft 1 is so constituted as to be free from the portion having the greater outside diameter than that of the cam mounting portion 14 and the rolling-bearing mounting portion 15. The pulley mounting portion 9 at the first end of the cam shaft 1 is also formed separately from the linear body of the cam shaft 1. Specifically, the pulley mounting portion 9 and the shaft portion for mounting the pulley mounting portion 9 are separate from the cam shaft 1. The shaft portion is assembled to the cam shaft 1 by threadedly engaging the shaft portion with a screw hole formed in an end face of the cam shaft 1, whereby the pulley mounting portion 9 is mounted to the cam shaft 1.

The cam shaft 1 may have a straight linear structure having a constant diameter for the overall length thereof, defining a uniform circular section with respect to the axial direction (namely, the outer periphery 1a of the cam shaft 1 is free from step for the overall length). Alternatively, the cam shaft 1 may also have a small-stepped linear structure wherein all the cam mounting portions 14 and all rolling-bearing mounting portions 15, having the same outside diameter, define the maximum diameter while the other shaft portions define a slightly smaller diameter. Since the oval cam 2 is separate from the cam shaft 1, the cam shaft 1 alone defines a circular cross section about the shaft axis as taken at any point of the overall axial length thereof.

The foregoing embodiments of the invention differs from the conventional cam shaft assembly shown in FIG.8 wherein separately prepared bearings are not assembled to the cam shaft, which is formed by unifying the shaft body 44 and the cam portions 43, until the engine is assembled. The invention does not consider the cam shaft and the bearings to be separate from each other but contemplates a cam shaft unit wherein the cam shaft 1 assembled with the cams 2 is further unified with the rolling bearings 3. Therefore, this unit may be directly assembled to the engine being assembled.

Since all the bearings supporting the cam shaft 1 are the rolling bearings 3 (the deep groove ball bearings and the cylindrical roller bearing 11), the cam shaft assembly may be reduced in frictional resistance at the start of rotation and during low speed rotation, in particular. Thus, the cam shaft assembly as a whole may be dramatically reduced in the friction loss during the rotation. Hence, the cam shaft assembly may be used in the automotive engine so as to contribute to an improved fuel economy of the engine.

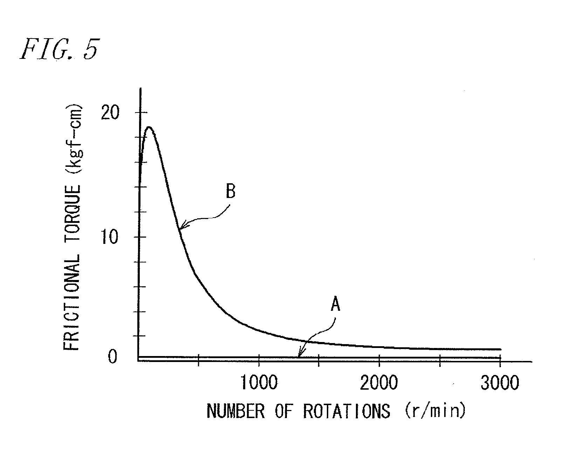

FIG.5 graphically shows a relation between the number of rotations and the frictional torque of each of the rolling bearing 3 of the invention and a slide bearing used in the conventional cam shaft assembly. The graph shows a test results of the frictional torque in correspondence to the progressively increased number of rotations. An arrow A indicates the test results of the rolling bearing 3, whereas an arrow B indicates the test results of the slide bearing. As seen from the graph, the rolling bearing 3 exhibits the low constant frictional torque irrespective of the increase or decrease of the number of rotations. In contrast, the slide bearing exhibits a very great frictional torque because the bearing has a particularly great static friction coefficient at the start of rotation. The graph also shows that the slide bearing in low speed rotation exhibits great vales of frictional torque. The test was conducted on a per-bearing basis under the following conditions. Each bearing lubricated with engine oil was operated with a radial load of 70kgf applied thereto while a bearing temperature was maintained at 65°C. The slide bearing employed a cylindrical bush having an inside diameter of 28mm, an outside diameter of 30mm and an axial length of 12mm. The rolling bearing 3 was equivalent to a bearing number of 6903.

According to the embodiments of the invention, all the cams 2 are separate from the cam shaft 1 and hence, the plural rolling bearings 3 may be fitted on the end of the cam shaft 1 and moved therefrom along the cam shaft 1 so as to be mounted to the respective predetermined positions. Therefore, the outer ring 5 and the inner ring 4 of the rolling bearing 3 need not have the split structure so that the raceway groove 12 of the outer ring 5 and the raceway groove 6 of the inner ring 4 are free from the seam.
Furthermore, the cam shaft 1 has the rolling bearings 3 directly mounted to its outer periphery 1a linearly extended in the axial direction and hence, the cam shaft 1 does not require the rolling-bearing mounting flanges which are required in the conventional cam shaft and have the greater diameter than that of the cams. Thus, the engine housing accommodating the cam shaft 1 may be reduced in radial dimension with respect to the center of the cam shaft 1.

The following working effect is offered by using the deep groove ball bearings as the rolling bearings 3 disposed in vicinity of the cams 2 for supporting the cam shaft 1. The cam shaft 1 is provided with the plural cams 2. The load is exerted on these cams 2 when the cams 2 operate the engine valves, thus causing periodic pulsations (vibrations) of the cam shaft 1. However, the deep groove ball bearing is capable of relieving the displacement of the pulsated cam shaft 1 by way of the raceway surfaces defined by curved surfaces and the balls 7 in contact with the raceway surfaces.
What is more, the rolling bearing 3 is capable of accommodating an axial load exerted on the cam shaft 1, thus restricting an axial displacement of the cam shaft 1. In the conventional cam shaft assembly shown in FIG.8, the cam shaft is provided with a flange 45 for restricting the axial movement thereof. The flange 45 is clamped by an inner rib (not shown) formed in the engine housing whereby the axial displacement of the cam shaft is restricted. However, the invention negates the need for the flange 45. The flange 45 of the conventional assembly and the inner rib of the housing are in sliding contact to produce friction, which causes the friction loss during the rotation of the assembly. However, such a friction loss may be eliminated by employing the ball bearing.

The cam shaft assembly of the invention is not limited to the illustrated embodiments and may be practiced in any other modes within the scope of the invention. While the embodiments shown in FIG.1 and FIG.3 use eight cams 2 and four rolling bearings 3, the locations and quantities of these components are not limited to these but are optional.

According to the invention constituted as described above, the torque of the cam shaft 1 may be reduced by employing the rolling bearing 3. Therefore, if this cam shaft assembly is used in the automotive engine or the like, the cam shaft assembly may contribute to the improved fuel economy of the engine. The rolling bearing 3 may be increased in service life because the raceway groove thereof is free from the seam. In addition, the radial dimension with respect to the center of the cam shaft 1 may be reduced.

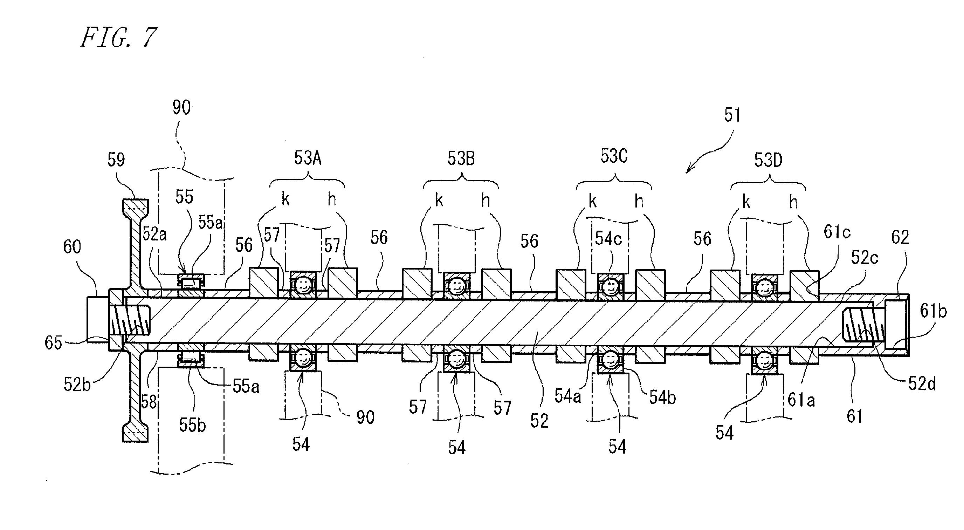

Next, description is made on another embodiment of the invention. FIG. 7 is a side view showing a cam shaft assembly 51. The cam shaft assembly 51 includes: a cam shaft 52 driven into rotation in synchronism with the rotation of an engine; a plurality of cam rows 53A to 53D fitted on an outer periphery of the cam shaft 52; and a plurality of rolling bearings 54, 55 and positioning spacers 56, 57, 58 mounted on the outer periphery of the cam shaft 52. Of these components, the cam shaft 52 is formed to have a constant outside diameter across the opposite ends thereof. The cam shaft 52 is rotatably carried on a supporting portion 90 disposed in a cam chamber (casing) by means of the plural rolling bearings 54, 55. A timing pulley 59 is mounted on an outer periphery of a first end 52a (the left-side end as seen in FIG.7) of the cam shaft 52. A bolt 60 is threadedly engaged with a bolt hole 52b formed in a first end face of the cam shaft 52, thereby preventing the timing pulley 59 from falling off from the cam shaft 52. The timing pulley 59 is connected to a crank shaft (not shown) as an output shaft by means of a timing belt (not shown). Hence, the timing pulley 59 is rotated in synchronism with the crank shaft so that a power is transmitted to the cam shaft 52 via the timing pulley 59.

A cap 61 is mounted to a second end 52c (the right-side end as seen in FIG.7) of the cam shaft 52. The cap 61 includes: a fitting portion 61a formed in a concave shape; and a bolt seat 61b. The second end 52c of the cam shaft 52 is fitted in the fitting portion 61a. A bolt 62 is threadedly engaged with a bolt hole 52d formed in a second end face 52c of the cam shaft 52 so as to be received by the bolt seat 61b, whereby the cap 61 is fixed to the cam shaft 52. The cam shaft assembly 51 of the embodiment includes the cam rows 53A to 53D each including one intake cam k and one exhaust cam h. As shown in the figure, the cam rows constitute a cam group as arranged from the first end toward the second end of the cam shaft 52.

The cam rows 53A to 53D including the intake cams k and exhaust cams h are fitted on the outer periphery of the cam shaft 52 as arranged thereon with equal spacing. The deep groove ball bearing 54 as the rolling bearing is interposed between the intake cam k and the exhaust cam h. The deep groove ball bearing 54 includes: an inner ring 54a; an outer ring 54b; and a ball-like rolling element 54c interposed between the inner ring 54a and the outer ring 54b. The deep groove ball bearing 54 is fitted on the outer periphery of the cam shaft 52 as located axially centrally between the intake cam k and the exhaust cam h. Further, the deep groove ball bearing 54 rotatably supports the cam shaft 52 in the cam chamber. Specifically, the inner ring 54a of the rolling bearing has its inner periphery fitted on the outer periphery of the cam shaft 52, while the outer ring 54b has its outer periphery fixed to the supporting portion 90 disposed in the cam chamber.

The cylindrical roller bearing 55 is mounted to the first end 52a of the cam shaft at place axially inward from the timing pulley 59. The cylindrical roller bearing 55 includes: an inner ring 55a; an outer ring 55b; and a cylindrical rolling element 55c interposed between the inner ring 55a and the outer ring 55b. The inner ring 55a has its inner periphery fitted on the outer periphery of the cam shaft 52, while the outer ring 55b has its outer periphery fixed to the supporting portion 90 disposed in the cam chamber. The load applied to the cam shaft 52 due to belt tension tends to increase at its portion adjacent to the timing pulley 59 for receiving the torque. Therefore, this portion is supported by the cylindrical roller bearing 55 in a manner to be rotatable relative to the cam chamber.

In addition to the aforesaid cam group, deep groove ball bearing 54 and cylindrical roller bearing 55, the first to third positioning spacers 56, 57, 58 having a cylindrical shape are mounted on the outer periphery of the cam shaft 52. The first to third positioning spacers 56, 57, 58 have different axial lengths, respectively. The first positioning spacer 56 is interposed between the cylindrical roller bearing 55 and the first cam row 53A, between the first cam row 53A and the second cam row 53B (between the exhaust cam h of the first cam row 53A and the intake cam k of the second cam row 53B), between the second cam row 53B and the third cam row 53C, and between the third cam row 53C and the fourth cam row 53D. The second positioning spacer 57 is disposed on both sides of the deep groove ball bearing 54 interposed between the intake cam k and the exhaust cam h of each cam row 53. The third positioning spacer 58 is interposed between the timing pulley 59 and the cylindrical roller bearing 55.

The length of the positioning spacers in descending order is: the first positioning spacer 56, the third positioning spacer 57 and the second positioning spacer 58. As shown in the figure, the first positioning spacer 56 closest to the timing pulley 59 has a first end face thereof abutted against an end face of the inner ring 55a of the cylindrical roller bearing and has a second end face thereof abutted against an end face of the intake cam k of the first cam row 53A. The other first positioning spacers 56 each have the opposite end faces thereof abutted against an end face of an intake cam k and an end face of an exhaust cam h. Each second positioning spacer 57 has its opposite end faces abutted against the end face of the intake cam k or of the exhaust cam h and an end face of the inner ring 54a of each deep groove ball bearing, the intake cam and the exhaust cam opposing each other as disposed in each cam row 53. The third positioning spacer 58 has a first end face thereof abutted against an end face of an inner diametral portion of the timing pulley 59 and has a second end face thereof abutted against an end face of the inner ring 54a of the cylindrical roller bearing 54. The exhaust cam h of the fourth cam row 53D has its end face abutted against an opening end face 61c of the cap.

In this manner, the cam rows 53 and the rolling bearings 54, 55 are axially positioned relative to the cam shaft 52 by means of the first to third positioning spacers 56, 57, 58. Namely, the cam rows 53 and the rolling bearings 54, 55 are prevented from being displaced axially. The cam shaft assembly 51 is assembled by sequentially press-mounting the cam rows 53 and the rolling bearings 54, 55 onto the outer periphery of the cam shaft 52 via the first end thereof. The first to third positioning spacers 56, 57, 58 are previously placed forwardly and rearwardly of the respective intake cams k, exhaust cams h and the rolling bearings 54, 55 in a press-mounting direction (axial direction), so that these components are collectively press-mounted on the cam shaft 52. Thus, the cam rows 53 and the rolling bearings 54, 55 may be mounted as maintaining individual predetermined distances between the respective pair of opposing end faces. Specifically, the cap 61 is first fixed to the second end 52c of the cam shaft by means of the bolt 62. Subsequently, the exhaust cam h of the fourth cam row 53D, the second positioning spacer 57, the deep groove ball bearing 54, the second positioning spacer 57, the intake cam k of the fourth cam row 53D, the first positioning spacer 56, the intake cam k of the first cam row 53A, the first positioning spacer 56, the cylindrical roller bearing 55, the third positioning spacer 58 and the timing pulley 59, in this order, are press-mounted to cam shaft 52 via the first end thereof. Finally, the bolt 60 is fastened to the cam shaft via a ring member 65.

According to the above assembly method, the cam rows 53 and rolling bearings 54, 55 being press-mounted are locked to the predetermined axial positions because of the first to third positioning spacers 56, 57, 58, so that the distances between the individual pairs of opposing faces may be adjusted to the predetermined lengths. Thus, the cam shaft assembly 51 may be assembled simply by threading the first to third positioning spacers 56, 57, 58 together with the cam rows 53, deep groove ball bearings 54 and cylindrical roller bearing 55 onto the cam shaft 52. Accordingly, the assembling operation is dramatically simplified so that the manufacture cost is reduced. It is noted that the invention is not limited to the above embodiment and the sizes and numbers of the positioning spacers may be varied according to the change of the number and arrangement of the cam rows, the change of the types, numbers and arrangement of the rolling bearings or the like.

According to the above embodiment, the positioning spacers are provided for restricting the axial movement of the cams and rolling bearings fitted on the cam shaft 52, so that the cams and rolling bearings may be assembled easily. Thus, the manufacture cost may be reduced.

## Claims

1. A cam shaft assembly comprising: a cam shaft; a cam formed separately from the cam shaft and including a through-hole thereby to be fitted on the cam shaft; and a rolling bearing including an annular monolithic bearing ring and serving to rotatably support the cam shaft.

2. A cam shaft assembly according to Claim 1, wherein the cam is fixed to the cam shaft as fitted thereon with interference.

3. A cam shaft assembly according to Claim 1 or 2, wherein the cam shaft has the same diameter at its portion where the cam is mounted and its portion where the rolling bearing is mounted.

4. A cam shaft assembly according to any one of Claims 1 to 3, wherein the rolling bearing comprises a deep groove ball bearing.

5. A cam shaft assembly according to any one of Claims 1 to 4, wherein an inner-ring raceway groove of the rolling bearing is formed in an outer periphery of the cam shaft.

6. A cam shaft assembly according to any one of Claims 1 to 5, wherein an elastic ring member is mounted on an outer periphery of an outer ring of the rolling bearing.

7. A cam shaft assembly according to any one of Claims 1 to 6, wherein a disk for drivably rotating the cam shaft is mounted to the cam shaft and wherein the cam shaft is supported by a roller bearing at its portion near the disk.

8. A cam shaft assembly according to any one of Claims 1 to 7 further comprising a positioning spacer disposed on an outer periphery of the cam shaft and serving to restrict the axial movement of the cam and the rolling bearing relative to the cam shaft.

9. An assembly method of a cam shaft assembly comprising a plurality of cams and a plurality of rolling bearings which are disposed on a cam shaft at predetermined axial positions, respectively, wherein the cams separate from the cam shaft and including through-holes and the rolling bearings are axially moved on the linear cam shaft from an end thereof to the respective predetermined positions in turn, whereby the cams and the rolling bearings are mounted to the cam shaft.

10. An assembly method of a cam shaft assembly according to Claim 9, wherein the cam is fixed to the cam shaft as fitted thereon with interference between the through-hole thereof and the cam shaft.

11. An assembly method of a cam shaft assembly according to Claim 9 or 10, wherein when each of the cams and the rolling bearings is press-mounted, a positioning spacer having a predetermined length is mounted to the cam shaft prior to the press-mounting thereof and subsequent to the press-mounting thereof.
